# EUROPÄISCHE PATENTSCHRIFT

(11) **EP 2 089 953 B1**
(45) Veröffentlichungstag und Bekanntmachung des Hinweises auf die Patenterteilung: **26.09.2018**
(21) Anmeldenummer: 07821135.6
(22) Anmeldetag: 10.10.2007
(51) Int. Cl.: H02K 3/28, H02K 1/16

(54) **ELEKTRISCHE MASCHINE**
ELECTRIC MACHINE
MACHINE ÉLECTRIQUE

(30) Priorität: 06.11.2006 DE 102006052111
(43) Veröffentlichungstag der Anmeldung: 19.08.2009
(73) Patentinhaber: SEG Automotive Germany GmbH, 70499 Stuttgart (DE)
(72) Erfinder: WOLF, Gert, 71563 Affalterbach (DE); PFITZKE, Norbert, 71701 Schwieberdingen (DE)
(74) Vertreter: Steinbauer, Florian
(86) Internationale Anmeldenummer: PCT/EP2007/060767
(87) Internationale Veröffentlichungsnummer: WO 2008/055752

(56) Entgegenhaltungen:
- EP-A- 1 296 439
- EP-A2- 1 294 076
- EP-A2- 1 294 076
- EP-A2- 1 296 439
- EP-A2- 1 296 439
- EP-A2- 1 653 587
- EP-A2- 1 653 587
- WO-A-02/089306
- WO-A1-2005/029679
- WO-A1-2005/029679
- DE-A1- 3 345 272
- US-A1- 2003 107 287
- US-A1- 2005 248 229

## Beschreibung

### Stand der Technik

Aus der DE 103 61 859 A1 ist eine elektrische Maschine bekannt, welche als Drehstromgenerator für Kraftfahrzeuge ausgebildet ist. Die Wicklungsenden sind dabei einzeln über zwischengeschaltetete Leiterelemente mit je einem elektrischen Anschluss einer Anschlussplatte sowie mit den Anschlüssen einer Gleichrichterbaugruppe verbunden, wodurch ein beachtlicher Verschaltungsaufwand bedingt ist, insbesondere bei höherphasigen Maschinen.

Aus der Offenlegungsschrift US 2005/0248229 A1 ist eine elektrische Maschine bekannt, die eine mehrphasige Wicklung aufweist. Diese Maschine weist ein geschlossen ringförmiges Ständereisen auf, welches mit nach innen gerichteten Nuten versehen ist. In diesen Nuten ist bekannt, mehrere Stranganschlüsse unmittelbar nebeneinander aus Nuten eines Ständereisens herauszuführen und miteinander zu verschalten.

Aus der Offenlegungsschrift EP 1 296 439 A2 sind verschiedene Ausführungsformen einer fünfsträngigen elektrischen Maschine bekannt, deren Wicklungen in Nuten eines geschlossen ringförmigen Ständereisens eingelegt sind. In den verschiedenen Ausführungsbeispielen sind Wicklungsanordnungen gezeigt, deren Leiter zu den Stranganschlüssen hin teilweise in direkt benachbarten Nuten eingelegt sind.

### Offenbarung der Erfindung

Die erfindungsgemäße elektrische Maschine mit den Merkmalen des unabhängigen Anspruchs hat den Vorteil, dass der Aufwand für die Stranganschlüsse niedrig gehalten wird. Dies gilt ganz besonders, wenn alle zu verschaltenden Stranganschlüsse in benachbarten Nuten des Ständers angeordnet werden, sodass sie direkt zusammengeschaltet und über eine gemeinsame Verbindung an den Gleichrichter angeschlossen werden können.

Weiterhin ist es zweckmäßig, wenn die Stranganschlüsse im Bereich von 10 benachbarten Nuten liegen, wobei jeweils die Stranganschlüsse der (2n-1)-ten Nut mit der 2n-ten Nut verschaltet sind und hierbei n eine ganze Zahl zwischen 1 und 5 ist. Eine derartige konzentrierte Anordnung der Stranganschlüsse eignet sich insbesondere für die Herstellung des Ständers als Flachpaket, welches nach dem Einbringen der Ständerwicklung zum fertigen, kreisrunden Ständer gerollt wird, da sich hierbei an der Stoßstelle zwischen den beiden Enden des Ständers nur zwei Überhänge der Wicklung befinden. Außerdem ergeben sich durch diese Anordnung fertigungstechnische Vorteile, da die Anschlüsse relativ dicht beieinander liegen und der Schweißvorgang hierdurch erleichtert wird.

Die Symmetrie der Ständerwicklung kann besonders vorteilhaft gestaltet werden, wenn in den Stranganschlüssen jeweils eine geradzahlige Anzahl von Leitern miteinander verschaltetet ist. Die Anzahl der Nuten im Ständer der erfindungsgemäßen Maschine liegt zweckmäßigerweise zwischen 60 und 80, wobei sich für die 5-strängige Ausführung der Ständerwicklung eine Ausführung des Läufers der Maschine mit 12, 14 oder 16 Klauenpolfingern ergibt. Diese Ausführungen liefern einerseits eine ausreichende Leistung der Maschine bei niedrigen Drehzahlen und sind auch noch bei den auftretenden Höchstdrehzahlen mechanisch ausreichend stabil.

### Kurze Beschreibung der Zeichnungen

Ausführungsbeispiele der Erfindung sind in den Figuren 1 bis 4 sowie 7, 8 und 8A dargestellt und in der nachfolgenden Beschreibung näher erläutert.

Es zeigen
- Fig. 1: einen Längsschnitt durch einen Wechselstromgenerator für Kraftfahrzeuge mit einem Klauenpolrotor,
- Fig. 2: ein Schaltschema eines fünfsträngigen Wechselstromgenerators mit nachgeordnetem Gleichrichter,
- Fig. 3: ein Wickelschema einer fünfsträngigen, als einfache Wellenwicklung ausgeführten Ständerwicklung mit auf die ersten 10 Nuten konzentrierten Anschlüssen,
- Fig. 4: ein Wickelschema einer fünfsträngigen, als verteilte Wellenwicklung ausgeführten Ständerwicklung mit auf 10 Nuten konzentrierten Anschlüssen,
- Fig. 5: ein Wickelschema einer fünfsträngigen, als einfache Wellenwicklung ausgeführten Ständerwicklung mit auf 30 Nuten verteilten Anschlüssen,
- Fig. 6: ein Wickelschema einer fünfsträngigen, als verteilte Wellenwicklung ausgeführten Ständerwicklung mit auf 30 Nuten verteilten Anschlüssen,
- Fig. 7: einen Schnitt durch den Ständer einer erfindungsgemäßen Maschine und die
- Figuren 8 und 8A: schematische Darstellungen eines Stranganschlusses der erfindungsgemäßen Ständerwicklung.

### Ausführungsformen der Erfindung

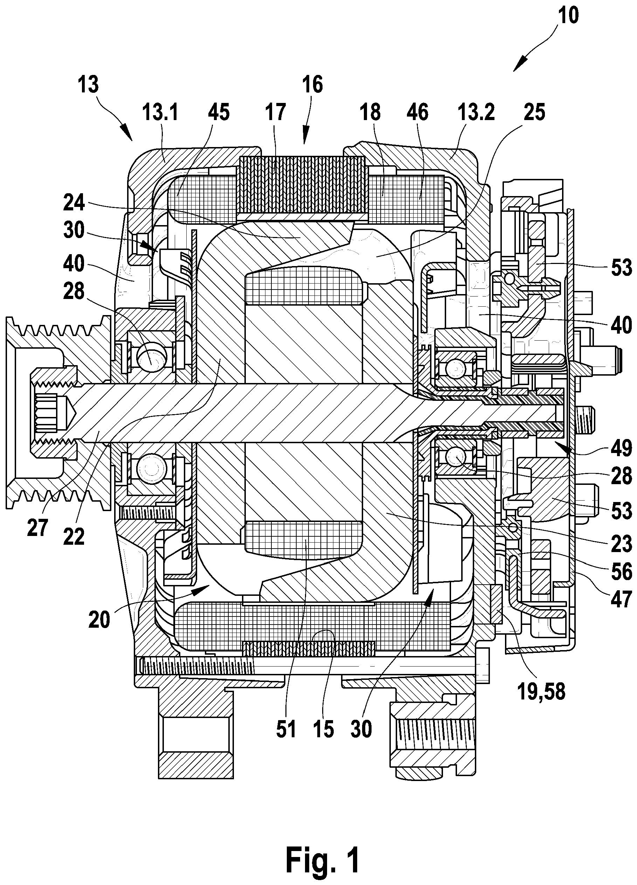

In Fig. 1 ist ein Schnitt durch einen Wechselstromgenerator 10 für Kraftfahrzeuge dargestellt. Dieser weist unter anderem ein zweiteiliges Gehäuse 13 auf, das aus einem ersten Lagerschild 13.1 und einem zweiten Lagerschild 13.2 besteht. Das Lagerschild 13.1 und das Lagerschild 13.2 nehmen in sich einen Ständer 16 auf, mit einem kreisringförmigen Blechpaket 17, in dessen nach innen offene und sich axial erstreckende Nuten 15 eine Ständerwicklung 18 eingelegt ist. Der ringförmige Ständer 16 umgibt mit seiner radial nach innen gerichteten Oberfläche einen elektromagnetisch erregten Läufer 20, der als Klauenpolläufer ausgebildet ist. Der Läufer 20 besteht unter anderem aus zwei Klauenpolplatinen 22 und 23, an deren Außenumfang sich jeweils in axialer Richtung erstreckende Klauenpolfinger 24 und 25 angeordnet sind. Beide Klauenpolplatinen 22 und 23 sind im Läufer 20 derart angeordnet, dass ihre sich in axialer Richtung erstreckenden Klauenpolfinger 24, 25 am Umfang des Rotors 20 einander als N-und S-Pole abwechseln. Es ergeben sich dadurch magnetisch erforderliche Klauenpolzwischenräume zwischen den gegensinnig magnetisierten Klauenpolfingern 24 und 25, welche wegen der sich zu ihrem freien Enden hin verjüngenden Klauenpolfinger 24 und 25 leicht schräg zur Maschinenachse verlaufen. Für die folgende Beschreibung der Erfindung und ist dieser Verlauf vereinfacht als axial bezeichnet.

Der Läufer 20 ist mittels einer Welle 27 und je einem auf je einer Seite befindlichen Wälzlager 28 in den jeweiligen Lagerschilden 13.1 beziehungsweise 13.2 drehbar gelagert. Er weist zwei axiale Stirnflächen auf, an denen jeweils ein Lüfter 30 befestigt ist. Diese Lüfter 30 bestehen im Wesentlichen aus einem plattenförmigen beziehungsweise scheibenförmigen Abschnitt, von dem Lüfterschaufeln in bekannter Weise ausgehen. Diese Lüfter 30 dienen dazu, über Öffnungen 40 in den Lagerschilden 13.1 und 13.2 einen Luftaustausch zwischen der Außenseite und dem Innenraum der elektrischen Maschine 10 zu ermöglichen. Dazu sind die Öffnungen 40 an den axialen Enden der Lagerschilde 13.1 und 13.2 vorgesehen, über die mittels der Lüfter 30 Kühlluft in den Innenraum der elektrischen Maschine 10 eingesaugt wird. Diese Kühlluft wird durch die Rotation der Lüfter 30 radial nach außen beschleunigt, so dass sie auch durch die kühlluftdurchlässigen Wickelköpfe 45 auf der Antriebsseite und 46 auf der Elektronikseite hindurchtreten kann. Durch diesen Effekt werden die Wickelköpfe gekühlt. Die Kühlluft nimmt nach dem Hindurchtreten durch die Wickelköpfe, beziehungsweise nach dem Umströmen dieser Wickelköpfe einen Weg radial nach außen durch nicht dargestellte Öffnungen.

In Figur 1 auf der rechten Seite befindet sich eine Schutzkappe 47, die verschiedene Bauteile vor Umgebungseinflüssen schützt. So deckt diese Schutzkappe 47 beispielsweise eine Schleifringbaugruppe 49 ab, die eine Erregerwicklung 51 mit Erregerstrom versorgt. Um diese Schleifringbaugruppe 49 herum ist ein Kühlkörper 53 angeordnet, der hier als Pluskühlkörper wirkt. Als sogenannter Minuskühlkörper wirkt das Lagerschild 13.2. Zwischen dem Lagerschild 13.2 und dem Kühlkörper 53 ist eine Anschlussplatte 56 angeordnet, welche im Lagerschild 13.2 befestigte Minusdioden 58 und in dieser Darstellung nicht gezeigte Plusdioden eines Gleichrichters 19 im Kühlkörper 53 in Form einer Brückenschaltung miteinander verbindet.

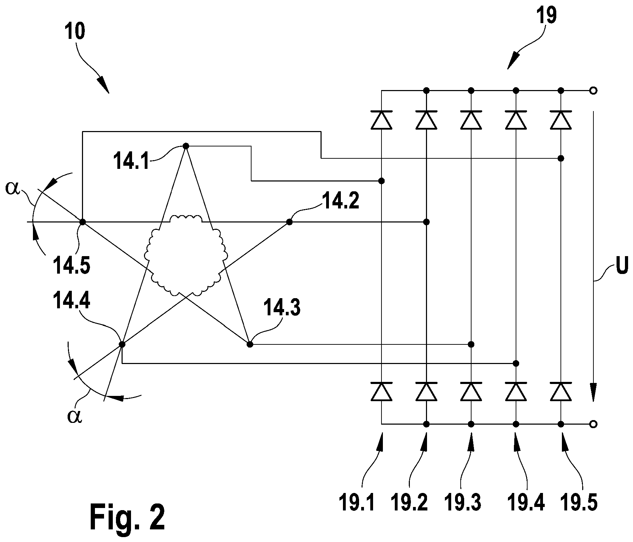

In Fig. 2 ist ein fünfsträngiger Generator 10 anhand eines Schaltbildes dargestellt. Die fünf Wickelstränge schließen jeweils paarweise an den Verbindungspunkten 14.1-14.5 den elektrischen Winkel α ein. Der Generator 10 liefert eine Spannung U am Ausgang eines (B10-)Gleichrichters 19 mit fünf Brückenzweigen 19.1-19.5. Die Zuordnung zwischen den Verschaltungspunkten 14 und Brückenzweigen 19 stellt sich wie folgt dar: 14.1 auf 19.1, 14.2 auf 19.2, 14.3 auf 19.3, 14.4 auf 19.4 und 14.5 auf 19.5. Der elektrische Winkel α zwischen zwei Wicklungssträngen an jedem Verschaltungspunkt 14 beträgt 36°.

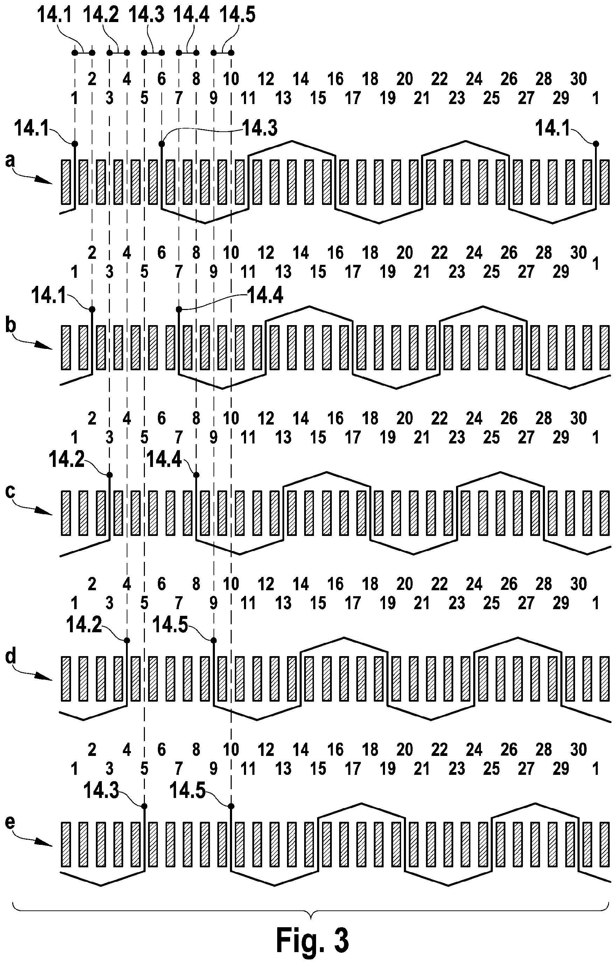

Die Figuren 3 bis 6 zeigen verschiedene Wickelschemen einer Ständerwicklung 18 mit 30 Nuten, was einer Ausführung des Läufers 20 mit 6 Klauenpolfingern 24 entspricht. In der Praxis wählt man für den Generator eines Kraftfahrzeuges üblicherweise eine höhere Nutzahl und eine höhere Zahl von Klauenpolfingern im Läufer 20, vorzugsweise eine Anzahl von 60-80 Nuten, was bei 5 Nuten je Läuferpol eine Anzahl von 12, 14 oder 16 Klauenpolfingern 24 entspricht. Die erfindungsgemäße fünfsträngige Ständerwicklung 18 wird vorzugsweise in der Form eines Drudenfußes (Pentagramm) verschaltet, wie dies in Abb. 2 dargestellt und dort bereits näher erläutert ist. Die Verbindung der einzelnen Stränge 14 ergibt sich dann in der Form, wie sie in den Figuren 3 bis 6 dargestellt ist, wobei alle zu verschaltenden Stranganschlüsse 14.1-14.5 in benachbarten Nuten angeordnet sind. Dies ist nicht zwingend, jedoch ergibt die Verschaltung ausschließlich benachbarter Stränge 14 die größtmöglichste Rationalisierung.

Fig. 3 zeigt das Wickelschema einer Ständerwicklung 18 in der Ausführung als einfache Wellenwicklung mit auf die ersten 10 Nuten 15 konzentrierten Stranganschlüssen 14.1-14-5. Hierbei sind die Wicklungsteile a bis e in Fig.3 separat dargestellt und die einzelnen Wicklungsanschlüsse durch gestrichelte Linien nach oben verlängert und dort entsprechend den Bezeichnungen in Fig. 2 zusammengeführt. Die Ständerwicklung ist fünfsträngig ausgeführt, wodurch sich eine optimale Verschaltungsmöglichkeit ergibt. Gleichzeitig sind bei dieser Ausführung der Wicklung die Geräuschentwicklung und die Welligkeit der erzeugten Generatorspannung U gering. Die zu verschaltenden Stranganschlüsse liegen alle in benachbarten Nuten und sind in besonders vorteilhafter Weise nach Art eines Drudenfußes (Pentagramm) verschaltet, wie dies anhand von Fig. 2 bereits dargestellt und erläutert ist. Eine derartige Verschaltung der Strangwicklungen bewirkt weiterhin eine sehr gute Ausnutzung der Maschine, insbesondere entstehen niedrigere Blindströme als bei einer Stern- oder Pentagonschaltung.

Entsprechend der fünfsträngigen Ausbildung der Ständerwicklung 18 ist die Anzahl der Ständernuten 15 jeweils ein Vielfaches von 10, die Anzahl der Klauenpole entspricht einem Fünftel der Nutenzahl. Die in den Figuren 3 bis 6 dargestellten Wickelschemen mit 30 Nuten bedingen somit 6 Klauenpolfinger 24 im Läufer 20. Diese Nutzahl ist jedoch nur zur vereinfachten Darstellung der Wicklung gewählt, da ein Läufer 20 mit nur 6 Klauenpolfingern erst ab einer relativ hohen Drehzahl die benötigte Ausgangsleistung erreicht. In der Praxis besitzen die in Kraftfahrzeugen als Generatoren eingesetzten elektrischen Maschinen in Klauenpolbauweise insbesondere 12 oder 16 Klauenpolfinger 24, sodass sich im üblichen Drehzahlbereich von Kraftfahrzeugen zwischen etwa 800 und 7000 U/min bei einer Übersetzung zum Generator von 1:2,5 -1:3 bei Drehzahlen der elektrischen Maschine ab etwa 1800 U/min im Leerlauf bereits eine ausreichende Ausgangsleistung ergibt, ohne dass die Maschine bei Höchstdrehzahlen des antreibenden Verbrennungsmotors mechanisch überbeansprucht wird.

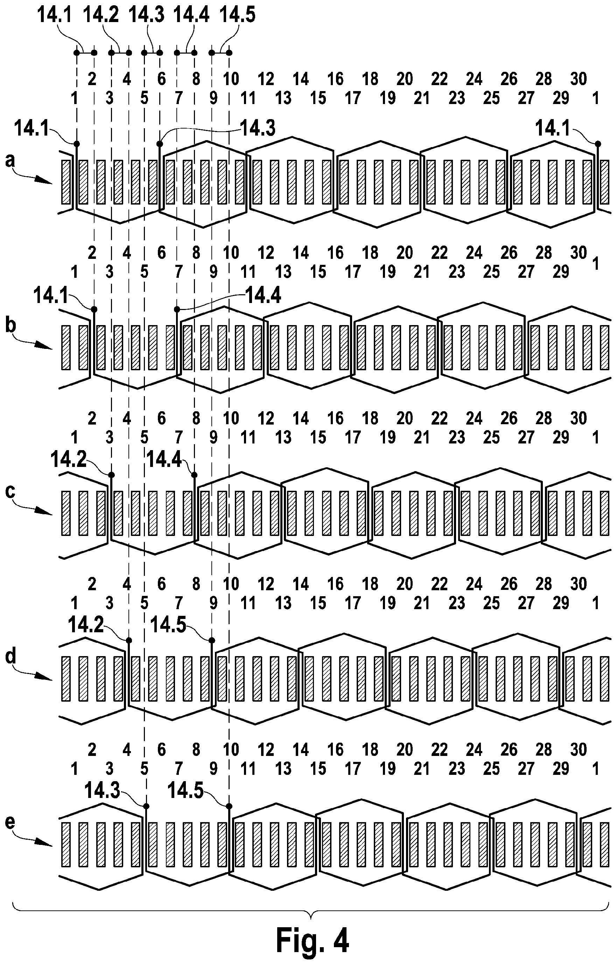

Das in Fig. 3 dargestellte Wickelschema zeigt eine einfache Wellenwicklung mit auf die ersten 10 Nuten am Ständerumfang konzentrierten Stranganschlüssen 14.1-14.5. Eine derartige Anordnung der Stranganschlüsse bietet insbesondere Vorteile bei einer ebenfalls konzentrierten Anordnung der Gleichrichter 19 auf der Anschlussplatte 56, weil sich hierdurch kurze Verbindungen zu den Gleichrichteranschlüssen und eine räumlich kompakte Anordnung der Schweißverbindungen ergibt. Die Verschaltung der einzelnen Leiter L der Stränge a bis e ergibt sich entsprechend Fig. 2 derart, dass im Stranganschluss 14.1 die Wicklung a mit der Wicklung b, im Stranganschluss 14.2 die Wicklung c mit der Wicklung d, im Stranganschluss 14.3 die Wicklung e mit der Wicklung a, im Stranganschluss 14.4 die Wicklung b mit der Wicklung c und im Stranganschluss 14.5 die Wicklung d mit der Wicklung e verbunden wird. Entsprechende Verbindungen der Wicklungen a bis e ergeben sich bei dem Wickelschema gemäß Fig. 4, wobei die Wicklung jedoch als verteilte Wellenwicklung ausgeführt ist.

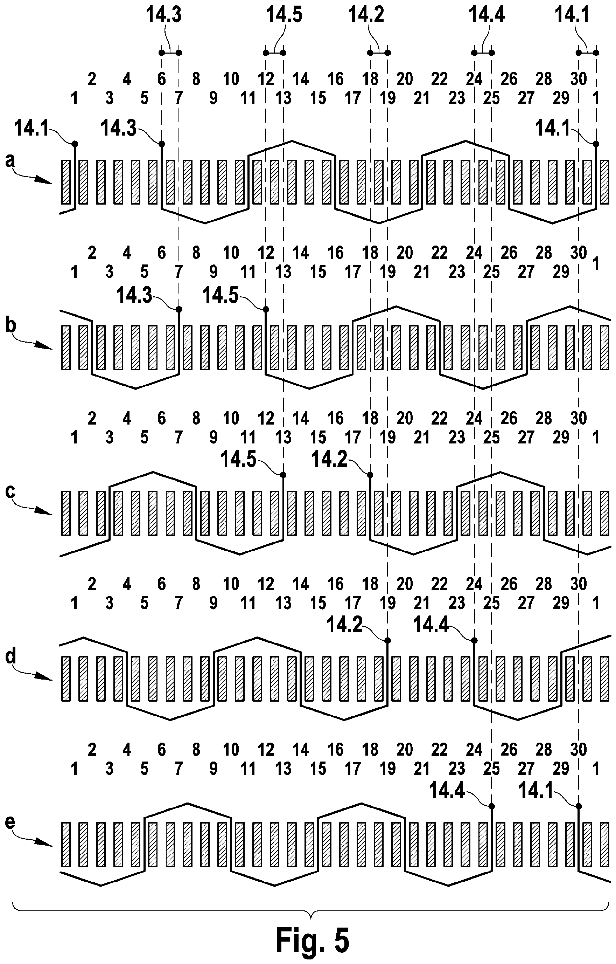

Fig. 5 zeigt ein Wickelschema mit als einfache Wellenwicklung ausgeführten Strängen a bis e, wobei die Stranganschlüsse 14.1-14.5 jedoch auf alle 30 Nuten gleichmäßig verteilt sind. Hierbei ist im Stranganschluss 14.1 der Strang a mit dem Strang e, im Stranganschluss 14.2 der Strang c mit dem Strang d, im Stranganschluss 14.3 der Strang a mit dem Strang b, im Stranganschluss 14.4 der Strang d mit dem Strang e und im Stranganschluss 14.5 der Strang b mit dem Strang c verbunden.

Die gleichmäßige Verteilung der Stranganschlüsse 14.1-14.5 über den gesamten Umfang des Ständers 16 bietet insbesondere dann Vorteile, wenn auch die Dioden des Gleichrichters 19 entsprechend gleichmäßig auf der Anschlussplatte 56 verteilt sind, wodurch sich einerseits günstige Kühlungsverhältnisse für die Gleichrichter und andererseits kurze und direkte Verbindungen von den Stranganschlüssen zu den Gleichrichtern ergeben.

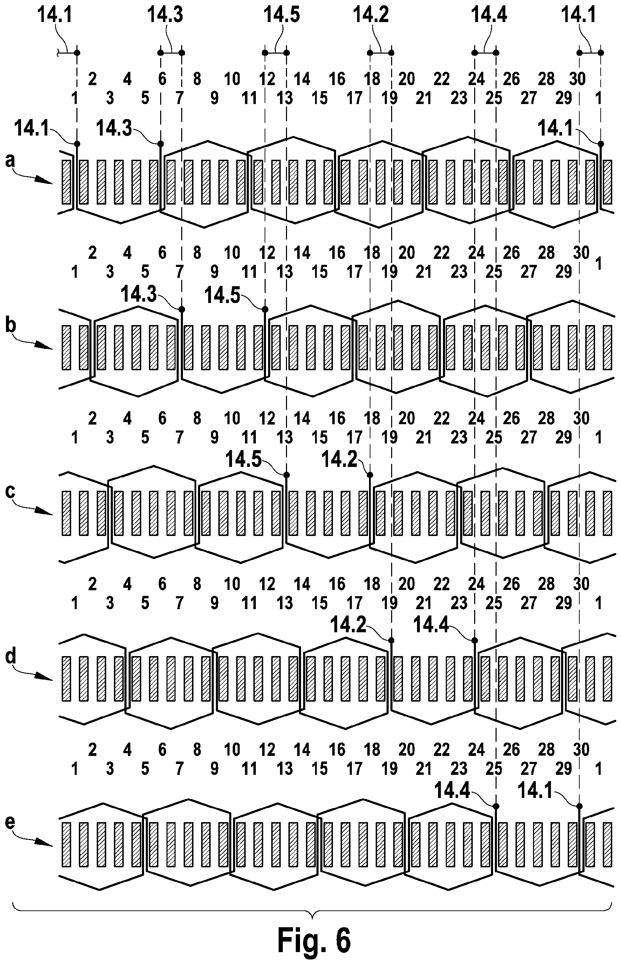

Das Wickelschema gemäß Fig. 6 entspricht hinsichtlich der Verteilung der Stranganschlüsse 14.1-14.5 dem Wickelschema in Fig. 5, jedoch ist hierbei die Ständerwicklung 18 entsprechend dem Schema in Fig. 4 wiederum als verteilte Wellenwicklung ausgebildet. Die Wellenwicklung entsprechend den Figuren 4 bis 6 hat gegenüber einer grundsätzlich ebenfalls verwendbaren Schleifenwicklung kürzere Leiterlängen und somit bei gleichem Leiterquerschnitt einen geringeren elektrischen Widerstand. Insbesondere bei der Ausführung der elektrischen Maschine als Klauenpolgenerator für Kraftfahrzeuge bietet die Wellenwicklung weiterhin fertigungstechnische Vorteile und es lässt sich eine günstige Gestaltung der Wickelköpfe mit hoher Luftdurchlässigkeit und entsprechend guter Kühlung der Wicklung einfach realisieren.

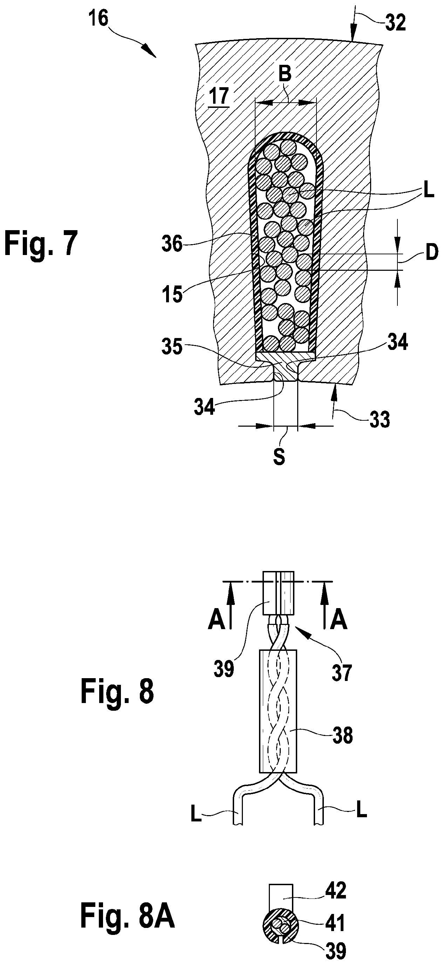

Fig. 7 zeigt in vergrößerter Darstellung die Gestaltung einer Nut 15 im Blechpaket 17 des Ständers 16. Hierin bezeichnet der Pfeil 32 den Ständeraußendurchmesser und der Pfeil 33 den Ständerinnendurchmesser, beziehungsweise den Bohrungsdurchmesser für die Aufnahme des Läufers 20. Mit 34 ist eine Nutöffnung bezeichnet, deren Schlitzbreite S kleiner ist als das Zweifache des Leiterdurchmessers D einschließlich der Leiterisolation. Die Nut 15 ist durch einen Nutverschluss 35 zum Ständerinneren 33 hin abgeschlossen. Die Leiter L sind zusätzlich durch eine Nutisolation 36 in der Nut 15 isoliert angeordnet. Hierbei ist die größte Nutbreite B größer als das Zweifache des Leiterdurchmessers D einschließlich der Leiterisolation. Die Anzahl der Leiter L in einer Nut 15 ist größer als 7, wodurch sich günstige Fertigungsverhältnisse mit höherer Nutfüllung bei ausreichender Kühlung der Wicklung ergeben.

In den Figuren 8 und 8A ist die Gestaltung der Stranganschlüsse 14.1-14.5 detailliert dargestellt für die Ausführung mit jeweils einem Leiter L in benachbarten Nuten. Die Leiterenden sind miteinander verdrillt und im Bereich 37 außerhalb einer Bündelungshülse 38 abisoliert und durch eine Verbindungsklammer 39 zusammengehalten. Innerhalb der Klammer 39 im Bereich 41 sind die Leiterenden 37 verlötet und mit einem Gleichrichteranschluss 42 versehen, wie dies Fig. 8a zeigt. Von dem Gleichrichteranschluss 42 führt jeweils eine Verbindung zu jeweils einem der Gleichrichteranschlüsse 19.1 bis 19.5 des Gleichrichters 19, wie dies in Fig. 2 dargestellt ist.

## Patentansprüche

1. Elektrische Maschine, insbesondere elektrisch erregter Klauenpolgenerator (10) für ein Kraftfahrzeug, mit einer Ständerwicklung (18), deren Stranganschlüsse (14.1-14.5) mit einer Gleichrichteranordnung (19) verbunden sind, wobei die Ständerwicklung (18) fünfsträngig als einfache oder verteilte Wellenwicklung ausgebildet ist und dabei alle Leiter (L) der Stranganschlüsse (14.1-14.5) in benachbarten Nuten (15) angeordnet sind, **dadurch gekennzeichnet, dass** alle Leiter (L) der zu verschaltenden Stranganschlüsse (14.1-14.5) in den ersten zehn unmittelbar benachbarten Nuten (15) eines nach dem Einbringen der Ständerwicklung aus einem Flachpaket zum fertigen, kreisrund gerollten Ständers angeordnet sind.

2. Elektrische Maschine nach Anspruch 1, **dadurch gekennzeichnet, dass** die Wicklungsstränge (a bis e) der Ständerwicklung (18) nach Art eines Drudenfußes (Pentagramm) verschaltet sind.

3. Elektrische Maschine nach einem der vorhergehenden Ansprüche, **dadurch gekennzeichnet, dass** der Ständer (16) fünf Nuten (15) je Läuferpol (24) aufweist.

4. Elektrische Maschine nach einem der vorhergehenden Ansprüche, **dadurch gekennzeichnet, dass** die Anzahl der Nuten (15) 60 bis 80 und die Anzahl der Klauenpolfinger (24) 12, 14 oder 16 beträgt

5. Elektrische Maschine nach einem der vorhergehenden Ansprüche, **dadurch gekennzeichnet, dass** die Stranganschlüsse (14.1-14.5) im Bereich von 10 benachbarten Nuten (15) liegen, wobei jeweils die Stranganschlüsse der (2n-1)-ten Nut mit der 2n-ten Nut verschaltet sind und n eine ganze Zahl zwischen 1 und 5 ist.

6. Elektrische Maschine nach einem der vorhergehenden Ansprüche, **dadurch gekennzeichnet, dass** in den Stranganschlüssen (14.1-14.5) jeweils eine geradzahlige Anzahl von Leitern (L) miteinander verschaltet ist.

## Claims

1. An electric machine, in particular electrically excited claw-pole generator (10) for a motor vehicle, having a stator winding (18) whose line connections (14.1-14.5) are connected to a rectifier arrangement (19), wherein the stator winding (18) is formed five-stranded as a simple or distributed wave winding and all conductors (L) of the strand connections (14.1-14.5) are arranged in adjacent grooves (15), **characterized in that** all the conductors (L) of the strand connections (14.1-14.5) to be interconnected are arranged in the first ten immediately adjacent grooves (15) of a post-stator winding from a flat package to the finished, circularly rolled stator.

2. An electric machine according to claim 1, **characterised in that** the winding strands (a to e) of the stator winding (18) are connected in the manner of a pentagram.

3. An electric device according to any one of the preceding claims, **characterised in that** the stator (16) has five grooves (15) per rotor pole (24).

4. An electric device according to any one of the preceding claims, **characterized in that** the number of grooves (15) is 60 to 80 and the number of claw pole fingers (24) is 12, 14 or 16.

5. An electric device according to any one of the preceding claims, **characterised in that** the strand connections (14.1-14.5) are in the range of 10 adjacent grooves (15), wherein in each case the strand connections of the (2n-1)-th groove are connected to the 2n-th groove and n is an integer between 1 and 5.

6. An electric device according to any one of the preceding claims, **characterised in that** in the strand connections (14.1-14.5) in each case an even number of conductors (L) is interconnected.

## Revendications

1. Machine électrique, en particulier une génératrice à pôles à griffes excitée électriquement (10) pour un véhicule automobile, comportant un enroulement de stator (18) dont les bornes de phase (14.1 à 14.5) sont reliées à un système redresseur (19), dans laquelle l'enroulement de stator (18) est configuré comme un enroulement ondulé simple ou réparti à cinq phases et tous les conducteurs (L) des bornes de phase (14.1 à 14.5) sont agencés dans des rainures (15) voisines, **caractérisée en ce que** tous les conducteurs (L) des bornes de phase à intercon-necter (14.1 à 14.5) sont agencés dans les dix premières rainures directement voisines (15) d'un stator laminé de manière circulaire, fabriqué à partir d'un empilage plat après l'insertion de l'enroulement de stator.

2. Machine électrique selon la revendication 1, **caractérisée en ce que** les bornes d'enroulement (a à e) de l'enroulement de stator (18) sont interconnectées à la manière d'un pentagramme.

3. Machine électrique selon l'une des revendications précédentes, **caractérisée en ce que** le stator (16) comporte cinq rainures (15) par pôle de rotor (24).

4. Machine électrique selon l'une des revendications précédentes, **caractérisée en ce que** le nombre des rainures (15) est de 60 à 80 et le nombre de doigts de pôle à griffe (24) est de 12, 14 ou 16.

5. Machine électrique selon l'une des revendications précédentes, **caractérisée en ce que** les bornes de phase (14.1 à 14.5) se situent dans la zone de 10 rainures voisines (15), dans laquelle les bornes de phase de la (2n-1)^{ème} rainure à la 2n^{ème} rainure sont respectivement interconnectées et n représente un nombre entier compris entre 1 et 5.

6. Machine électrique selon l'une des revendications précédentes, **caractérisée en ce que** dans les bornes de phase (14.1 à 14.5), un nombre pair de conducteurs (L) sont respectivement interconnectés.
